**Europäisches Patentamt**

**European Patent Office**

**Office européen des brevets**

(11) Veröffentlichungsnummer: **0 125 656**
**A2**

## (12) EUROPÄISCHE PATENTANMELDUNG

(21) Anmeldenummer: **84105372.1**

(22) Anmeldetag: **11.05.84**

(51) Int. Cl.³: **G 11 B 15/08**
**G 11 B 23/04**

(30) Priorität: **16.05.83 DE 3317743**

(43) Veröffentlichungstag der Anmeldung:
**21.11.84 Patentblatt 84/47**

(84) Benannte Vertragsstaaten:
**DE GB**

(71) Anmelder: **TANDBERG DATA A/S**
**Kjelsasveien 161 Postboks 9 Korsvoll**
**N-Oslo 8(NO)**

(72) Erfinder: **Rudi, Guttorm**
**Edvard-Grieg-Sveien 17**
**Fjellhamar(NO)**

(74) Vertreter: **Mehl, Ernst, Dipl.-Ing. et al,**
**Postfach 22 01 76**
**D-8000 München 22(DE)**

(54) **Fotoelektrische Sensoranordnung für ein Magnetbandgerät.**

(57) Zum Erkennen von zwei übereinander angeordneen lochförmigen Markierungen (5) in einem Magnetband (4), das in einer Kassette (3) enthalten ist, sind zwei in Laufrichtung und senkrecht zur Laufrichtung des Magnetbands (4) gegeneinander versetzt angeordnete Lichtquellen (1, 2) vorgesehen. Hinter dem Magnetband (4) ist in der Kassette (3) ein Spiegel (6) angeordnet, der das von den Lichtquellen (1, 2) ausgesandte Licht zu zwei im rechten Winkel zu den Lichtquellen angeordneten Lichtempfängern umlenkt.

FIG 1

EP 0 125 656 A2

Croydon Printing Company Ltd.

## Fotoelektrische Sensoranordnung für ein Magnetbandgerät

Die Erfindung bezieht sich auf eine fotoelektrische Sensoranordnung für ein Magnetbandgerät entsprechend dem Oberbegriff des Patentanspruchs 1.

Es sind bereits allgemein Magnetbandgeräte bekannt, bei denen das Magnetband in Kassetten untergebracht ist. Bei einer bekannten Kassette weist das Magnetband lochförmige Markierungen auf, die senkrecht zur Bewegungsrichtung des Magnetbands übereinander angeordnet sind. Hinter dem Magnetband ist im Winkel von 45° gegen das Magnetband ein Spiegel angeordnet, mit dem Lichtstrahlen zum Abtasten der lochförmigen Markierungen umlenkbar sind.

Aus der DE-AS 24 24 653 ist eine fotoelektrische Sensoranordnung für ein Magnetbandgerät bekannt, bei dem räumlich relativ weit voneinander getrennt links und rechts neben einem Magnetkopf jeweils ein Lichtsender und ein Lichtempfänger angeordnet sind. Mit Hilfe dieser bekannten fotoelektrischen Sensoranordnung wird das Ende eines Magnetbands erkannt, um dessen Laufrichtung anschließend zu ändern. Diese bekanne fotoelektrische Sensoranordnung erfordert einen verhältnismäßig großen Aufwand, da für jede Lichtquelle und Lichtempfänger ein eigenes Gehäuse erforderlich ist. Außerdem erfordert die Sensoranordnung einen verhältnismäßig großen Platz, da an zwei Stellen des Magnetbandgeräts die Lichtsender und Lichtempfänger angeordnet werden müssen. Schließlich eignet sich die bekannte Sensoranordnung auch nicht für die Verwendung von

Ret 1 Fra / 19.3.1984

Magnetbandkassetten, in denen das Magnetband untergebracht ist.

Aus der GB-PS 1 515 554 ist eine fotoelektrische Sensoranordnung bekannt, bei der nur eine Lichtquelle und ein Lichtempfänger verwendet werden, um eine Markierung auf dem Magnetband in der Kassette zu erkennen. Die Lichtquelle und der Lichtempfänger sind außerhalb der Kassette angeordnet, während innerhalb der Kassette Spiegel oder reflektierende Marken angeordnet sind. Diese bekannte Anordnung eignet sich nicht zum Abtasten von zwei an verschiedenen Stellen senkrecht zur Laufrichtung in der Ebene des Magnetbands angeordneten Markierungen, da dann die Lichtquelle und der Lichtempfänger einen zu großen Einfallswinkel aufweisen müßten, um beide Markierungen zu erfassen.

Aus der US-PS 4,380,032 ist schließlich eine fotoelektrische Sensoranordnung für ein Magnetbandgerät bekannt, bei dem das Magnetband über einen Spiegel innerhalb der Kassette von einer Lichtquelle beleuchtet wird. Hinter dem Magnetband sind zwei Lichtempfänger angeordnet, die zum Erkennen der Markierungen auf dem Magnetband dienen. Dieser US-PS ist auch zu entnehmen, die Lichtquelle und die Lichtempfänger sehr eng benachbart anzuordnen. Dies ist insbesondere dann der Fall, wenn auf dem Magnetband nicht die Markierungen, sondern weitere farbige Markierungen erkannt werden sollen. In jedem Fall wird jedoch nur eine einzige Lichtquelle verwendet, die die verschiedenen Markierungen beleuchtet. Diese bekannte Sensoranordnung erfordert eine konstruktive Änderung der Kassette, da die Sensoranordnung in die Kassette eingeführt werden muß und zu diesem Zweck eine entsprechende Öffnung in der Kassette vorgesehen werden muß. Falls für jeden Lichtempfänger eine eigene Lichtquelle vorgesehen werden würde, würde dies einen verhältnismäßig großen Raum beanspruchen und

0125656

die Öffnung in der Kassette müßte entsprechend groß ausgebildet sein. Durch die Verwendung einer einzigen Lichtquelle für die beiden Lichtempfänger muß diese einen verhältnismäßig großen Austrittswinkel aufweisen, so daß die beiden Lichtempfängern zugeordneten Markierungen beleuchtet werden. Die Verwendung von entsprechenden Lichtleitern erhöht ebenfalls den Aufwand und die Größe der Öffnung in der Kassette.

Der Erfindung liegt daher die Aufgabe zugrunde, für eine handelsübliche Magnetbandkassette eine fotoelektrische Sensoranordnung anzugeben, mit der auf einfache Weise und unter Verwendung von verhältnismäßig großen Lichtquellen und/oder Lichtempfängern eine zuverlässige Erkennung von lochförmigen Markierungen in dem Magnetband möglich ist.

Erfindungsgemäß wird die Aufgabe bei der Sensoranordnung der eingangs genannten Art durch die im kennzeichnenden Teil des Patentanspruchs 1 angegebenen Merkmale gelöst.

Die Sensoranordnung gemäß der Erfindung hat den Vorteil, daß sie einen verhältnismäßig einfachen Aufbau aufweist, daß sie sehr zuverlässig arbeitet und daß sie infolge der Verwendung von zwei jeweils gegeneinander versetzt angeordneten Lichtquellen und Lichtempfängern auch die Möglichkeit bietet, die Laufrichtung des Magnetbands festzustellen. Das Licht kann sehr stark gebündelt werden und die Lichtempfänger müssen nur einen geringen Öffnungswinkel aufweisen, so daß auch die Sicherheit gegen Streulicht erhöht wird.

Ein Ausführungsbeispiel der Sensoranordnung gemäß der Erfindung wird im folgenden anhand von Zeichnungen näher erläutert. Es zeigen

Fig. 1 ein Schnittbild durch die Sensoranordnung,

Fig. 2 eine Frontansicht auf die Sensoranordnung.

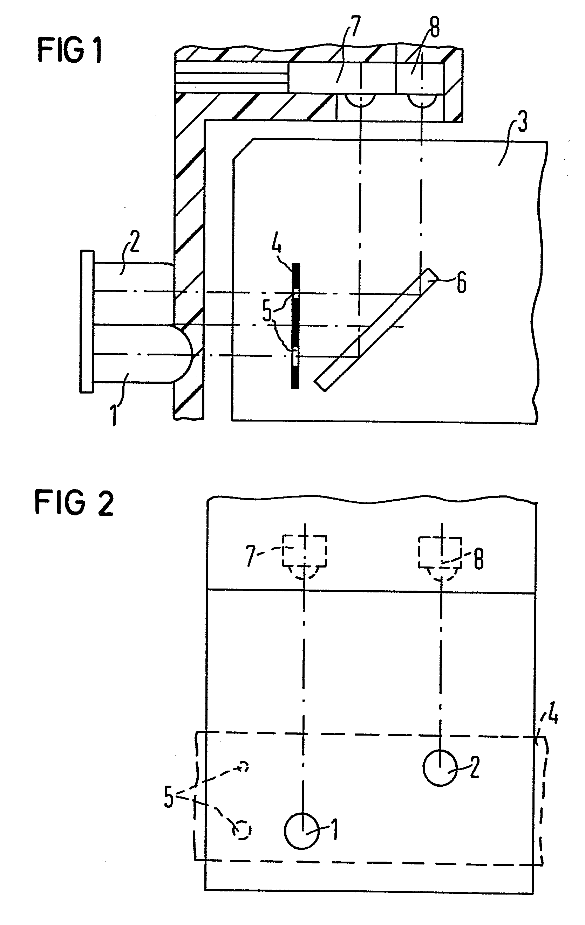

Bei der in Fig. 1 dargestellten fotoelektrischen Sensoranordnung sind zwei, vorzugsweise als Leuchtdioden ausgebildete Lichtquellen 1 und 2 vorgesehen, die Licht auf eine Öffnung in einer Kassette 3 werfen. In der Kassette 3 ist ein Magnetband 4 enthalten, das lochförmige Markierungen 5 aufweist. Die Markierungen sind senkrecht zur Bewegungsrichtung des Magnetbands 4 übereinander angeordnet. Hinter dem Magnetband 4 ist ein Spiegel 6 im Winkel von etwa 45° zum Magnetband 4 angeordnet, der die von den Lichtquellen 1 und 2 ausgesandten Lichtstrahlen zu, ins- besondere als Fototransistoren ausgebildeten Lichtempfän- gern 7 und 8 umlenkt.

Die Lichtquellen 1 und 2 sind in Laufrichtung des Magnetbands 4 hintereinander angeordnet und senkrecht zur Laufrichtung des Magnetbands 4 versetzt angeordnet. In entsprechender Weise sind die Lichtempfänger 7 und 8 angeordnet.

Bei der in Fig. 2 dargestellten Frontansicht der Sensoranordnung ist das Magnetband 4 mit den Markierungen 5 gestrichelt dargestellt. Unter Verwendung der Lichtquellen 1 und 2, die in Laufrichtung des Magnetbands 4 und senkrecht zur Aufrichtung versetzt angeordnet sind, ist es möglich, diese Markierungen 5 zu erkennen. Hierzu wird das von den Lichtquellen 1 und 2 ausgesandte Licht zu den Lichtempfängern 7 und 8 umgelenkt, wenn die Markierungen 5 vor den Lichtquellen 1 bzw. 2 erscheinen.

Durch die versetzte Anordnung der Lichtquellen 1 und 2 und der Lichtempfänger 7 und 8 ist es nicht nur möglich, verhältnismäßig große Lichtquellen 1 und 2 oder verhältnismäßig große Lichtempfänger 7 und 8 zu verwenden, da diese räumlich verhältnismäßig weit voneinander getrennt angeordnet werden können. Es ist auch möglich, mittels dieser Anordnung nicht nur die Anwesenheit der Markierungen 5 zu erkennen, sondern auch die Laufrichtung des Magnetbands 4 festzustellen, da, im Gegensatz zur Verwendung von zwei übereinander bzw. nebeneinander angeordneten Lichtquellen oder Lichtempfänger die entsprechenden Signale zu verschiedenen Zeitpunkten auftreten und aus der Reihenfolge des Auftretens die Laufrichtung auf einfache Weise ermittelt werden kann. Die Sensoranordnung hat weiterhin den Vorteil, daß die Lichtquellen 1 und 2 ein stark gebündeltes Licht aussenden können und die Lichtempfänger 7 und 8 nur einen kleinen Einfallswinkel aufweisen müssen, so daß die Gefahr des Erfassens von Streulicht sehr gering ist.

3 Patentansprüche
2 Figuren

**0125656**

Patentansprüche

1. Fotoelektrische Sensoranordnung für ein Magnetbandgerät, bei dem ein Magnetband in einer Kassette enthalten ist, bei dem auf dem Magnetband senkrecht zur Laufrichtung nebeneinander zwei lochförmige Markierungen vorgesehen sind und bei dem die Markierungen fotoelektrisch unter Verwendung eines hinter dem Magnetband angeordneten Spiegels abgetastet werden, d a d u r c h  g e k e n n - z e i c h n e t ,  daß zwei Lichtquellen (1, 2) in Laufrichtung des Magnetbands (4) und senkrecht zur Laufrichtung gegeneinander versetzt angeordnet sind und daß auch zwei Lichtempfänger (7, 8) in Laufrichtung des Magnetbands (4) und senkrecht zur Ebene des Magnetbands (4) gegeneinander versetzt angeordnet sind.

2. Fotoelektrische Sensoranordnung nach Anspruch 1, d a - d u r c h  g e k e n n z e i c h n e t ,  daß jede Lichtquelle (1 bzw. 2) und der zugehörige Lichtempfänger (7 bzw. 8) jeweils senkrecht zueinander in Bezug auf den Spiegel (6) angeordnet sind.

3. Fotoelektrische Sensoranordnung nach Anspruch 1 oder Anspruch 2, d a d u r c h  g e k e n n z e i c h n e t , daß der Abstand der Lichtquellen (1, 2) und der Lichtempfänger (7, 8) senkrecht zur Laufrichtung des Magnetbands (4) bzw. senkrecht zur Ebene des Magnetbands (4) voneinander einen Abstand aufweisen, der gleich ist dem Abstand der Markierungen (5) auf dem Magnetband (4).

FIG 1

FIG 2